# EUROPEAN PATENT SPECIFICATION

(11) **EP 4 754 763 B1**
(45) Date of publication and mention of the grant of the patent: **18.11.2026**
(21) Application number: 25737450.4
(22) Date of filing: 05.06.2025
(51) Int. Cl.: G10L 21/0272, G10L 25/30, G06N 3/045, G06N 3/08, G06N 3/09, G06N 3/084

(54) **SYSTEMS AND METHODS FOR PSEUDO-AUTOREGRESSIVE SIAMESE TRAINING FOR ONLINE SPEECH SEPARATION**
SYSTEME UND VERFAHREN FÜR PSEUDO-AUTOREGRESSIVES SIAMESE-TRAINING ZUR ONLINE-SPRACHTRENNUNG
SYSTÈMES ET PROCÉDÉS D'APPRENTISSAGE SIAMOIS PSEUDO-AUTORÉGRESSIF POUR SÉPARATION DE PAROLE EN LIGNE

(30) Priority: 30.08.2024 US 202418821121
(43) Date of publication of application: 10.06.2026
(73) Proprietor: MITSUBISHI ELECTRIC CORPORATION, Chiyoda-ku Tokyo 100-8310 (JP)
(72) Inventor: PAN, Zexu, Cambridge, Massachusetts 02139-1955 (US); WICHERN, Gordon, Cambridge, Massachusetts 02139-1955 (US); GERMAIN, Francois, G., Cambridge, Massachusetts 02139-1955 (US); SAIJO, Kohei, Cambridge, Massachusetts 02139-1955 (US); LE ROUX, Jonathan, Cambridge, Massachusetts 02139-1955 (US)
(74) Representative: Pfenning, Meinig & Partner mbB
(86) International application number: PCT/JP2025/080084
(87) International publication number: WO 2026/049065

(56) References cited:
- PAVEL ANDREEV ET AL: "Iterative autoregression: a novel trick to improve your low-latency speech enhancement model", ARXIV.ORG, CORNELL UNIVERSITY LIBRARY, 201 OLIN LIBRARY CORNELL UNIVERSITY ITHACA, NY 14853, 1 June 2023 (2023-06-01), XP091525930
- ZEXU PAN ET AL: "NeuroHeed: Neuro-Steered Speaker Extraction using EEG Signals", ARXIV.ORG, CORNELL UNIVERSITY LIBRARY, 201 OLIN LIBRARY CORNELL UNIVERSITY ITHACA, NY 14853, 26 July 2023 (2023-07-26), XP091575275
- LI CHENDA ET AL: "Skim: Skipping Memory Lstm for Low-Latency Real-Time Continuous Speech Separation", ICASSP 2022 - 2022 IEEE INTERNATIONAL CONFERENCE ON ACOUSTICS, SPEECH AND SIGNAL PROCESSING (ICASSP), IEEE, 23 May 2022 (2022-05-23), pages 681 - 685, XP034158923, [retrieved on 20220427], DOI: 10.1109/ICASSP43922.2022.9746372

## Description

### [Technical Field]

The present disclosure generally relates to neural network-based approaches for speech separation in audio streams and particularly to systems and methods for pseudo-autoregressive Siamese training for online speech separation.

### [Background Art]

Several applications that operate on or use the principles of speech processing require precise separation of speeches from each speaker/source. For example, with audio streams, separating useful information from noise often requires dealing with utterances that overlap in time and frequency. In such scenarios, speech separation cannot be performed using conventional filtering techniques.

In recent years, many speech separation models have been trained to separate a target speaker's speech from mixed audio. However, the majority of speech separation and extraction networks are primarily designed and evaluated for offline processing. As such, the streaming regime remains less explored and is typically limited to causal modifications of existing offline networks. A major drawback of such approaches stems from the fact that such offline networks are usually capable of utterance-level processing and hence find limited applications. For example, such offline approaches are inadequate for generating high-fidelity audios from mixed audio without delay and hence are not suitable when high quality speech separation is desired.

Some solutions are simple causal modifications of offline networks, but they suffer from significant degradation of separation quality because they no longer have access to future inputs. Other solutions attempt to compensate for this degradation in quality by separating speech in an autoregressive manner, feeding the past frame's output as input to the next frame, but they suffer from tedious training requirements because with such solutions the underlying model needs to forward-pass every feature frame sequentially in steps. One approach to remedy this issue is to use teacher forcing, which uses the ground truth as the past-step estimate during training and utilizes model output during inference, but with such approaches, the error at inference time quickly expands due to high frame rate of most speech signals. Therefore, there is still a need for online speech processing techniques capable of performing high-fidelity speech generation from mixed signals while having a low training burden. Additionally, training schemes tailored for training models to perform high-fidelity audio separation from mixed audio streams is also desired.

Pavel Andreev et al: "Iterative autoregression: a novel trick to improve your low-latency speech enhancement model" (https://doi.org/10.48550/arXiv.2211.01751) propose a technique for training autoregressive low-latency speech enhancement models. The approach is based on the iterative substitution of ground-truth conditioning with the model's predictions in teacher-forcing mode.

### [Summary of Invention]

Example embodiments provided herein are directed towards systems, methods, and devices for supervised training of a causal neural network for speech separation in streaming audio processing applications. It is an object of some embodiments to provide a streaming speech separation model with autoregressive capability, in which the current step separation is conditioned on separated samples from past steps. Some embodiments introduce a pseudo-autoregressive training approach with two forward passes through a Siamese-style network for each batch, thereby avoiding the training-inference mismatch in teacher forcing and the need for numerous autoregressive steps during training. Various example embodiments of the present disclosure are based on realizations and recognitions achieved through rigorous research and experimentations, some of which are described herein.

Some embodiments are based on the understanding that neural networks for streaming audio processing applications, such as speech separation, can be trained as autoregressive models that predict the next value in a sequence based on the past values in the same sequence. The autoregressive nature can improve the quality of such causal neural networks trained for streaming audio processing applications because streaming utterances (i.e., portions of a streaming signal with non-zero amplitude) are usually processed in chunks, and, thus, a previously processed chunk of information can be used to condition the processing of a subsequent chunk of information.

However, it is a realization of some embodiments that training such an autoregressive model is challenging because training the model by individually processing each chunk of information of utterances that is one or more short time frames of utterances would significantly delay the training and in some situations make the training computationally impractical. Some embodiments are based on the understanding that while the online processing of streaming audio signals can be in the chunks of time frames of the utterances, the training should be performed on the entire utterances. Doing it in such a manner can speed up the training but poses an additional challenge of acquiring the conditional input for processing the entire utterance during the training.

Some embodiments are based on recognizing that when the training is performed in a supervised manner, the ground-truth outputs can be used to condition the transformation. Indeed, for the supervised training, the ground-truth utterances are available, and their delayed versions can be used to condition the transformation of the input utterances to mimic the delay in acquiring conditional input during the online streaming execution. However, after some testing and simulation, some embodiments are based on the understanding that such training methods are prone to mismatch between training time and inference time processing.

Some embodiments are based on the recognition that the cause of such a problem is a strong influence of the ground-truth information used to condition the training on updating the weights of the neural network during the back-propagation part of the training. This results in the trained model overtly relying on the conditioning information, because that information is highly reliable during training. As this is no longer the case at inference time as the model starts making mistakes, the inference time conditions depart from the training conditions, and performance greatly degrades.

Further, some embodiments are based on the recognition that online autoregressive speech separation is performed by a multi-time-step prediction training (MCT). In such a case, for each batch in training, the model is initialized with the aforementioned supervised training and then performs forward pass a number of time steps before backpropagation. The model performs better when the number of forward passes is close to the model's receptive field. Alternatively, iterative autoregression (IA) is performed for speech enhancement, where the whole utterance is forward passed instead. IA first trains the model using the aforementioned supervised training, then replaces the conditioning ground truth with the model's outputs iteratively from the previous forward propagation in the next few stages, and the loss is backpropagated only for the last pass. Both approaches involve forward-passing the model many times to reduce the mismatch between the aforementioned supervised training and free-running inference.

Example embodiments described herein address this problem to remove the influence of the ground-truth information while keeping the number of training iterations small to reduce the training cost. To address the above-mentioned problems, the present disclosure provides a system and a method for supervised training of a causal neural network for a streaming audio processing application that replaces the ground truth utterance used to condition the transformation with an output of the neural network determined without the conditional input.

Specifically, some embodiments disclose training the neural network to transform an input utterance (i.e., a speech mixture signal) into an output utterance matching a ground truth utterance by processing the input utterance conditioned on a causal input including a delayed version of the separated outputs obtained by processing the input utterance with the causal neural network without the causal input. In some implementations, the non-causal version of the output utterance produced by the causal neural network without the causal input is performed by replacing the causal input with predetermined values agnostic to the input utterance.

Additionally, some embodiments also disclose that the neural network is trained to process the input utterance in segments or chunks, to ensure compatibility with streaming audio processing applications. These chunks represent semi-sized portions of the input utterance, and their size (i.e. the number of frames in the chunk) may be defined by design, together with the architecture of the network. This approach enables the trained neural network to handle audio in a manner that aligns with the needs of real-time processing.

In such a manner, some embodiments train the neural network that includes a first input channel for accepting the input utterance and a second input channel for accepting the causal input, wherein the training is performed in only two steps, i.e., a first step and a second step for each input utterance. During the first step, the causal neural network is executed with the input utterance accepted on the first channel and with predetermined values agnostic to the input utterance accepted on the second channel to produce a non-autoregressive version of the output utterance produced by the causal neural network without the causal input. Further, during the second iteration, the causal neural network is executed with the input utterance accepted on the first channel and with the delayed version of the non-autoregressive output utterance accepted on the second channel to produce the output utterance.

Further, in some embodiments, the training process is controlled by a loss function designed to evaluate both the quality of the intermediate clean speech output from the first iteration and the final clean speech output (i.e., the output utterance) from the second iteration. Each iteration is linked to its own loss function, which can be based on metrics such as the signal-to-noise ratio between the ground truth and the estimated clean speech, or other comparison measures like mean-squared error or mean absolute error. The overall loss function for training the network is computed as a weighted sum of these individual loss functions.

The weights of the causal neural network are updated with back-propagation to reduce a compound loss function including a first loss term of an error between the non-autoregressive output utterance and the ground truth utterance and a second loss term of an error between the output utterance and the ground truth utterance.

In some embodiments, the training uses a pseudo-autoregressive Siamese training of multiple copies of the causal neural network with shared weights, wherein a first copy of the causal neural network is used to produce the non-autoregressive output utterance and a second copy of the causal neural network is used to generate the output utterance, wherein the execution of the second copy is delayed from the execution of the first copy with an extent of a delay.

In some embodiments, the streaming audio processing application involves speech separation that is performed using the trained causal neural network. In such a case, the input utterance consists of a mixed speech signal and the output utterance is comprised of two or more distinct speech utterances that have been separated from the original mixed speech signal by using the trained causal neural network.

The presently disclosed embodiments will be further explained with reference to the following drawings. The drawings shown are not necessarily to scale, with emphasis instead generally being placed upon illustrating the principles of the presently disclosed embodiments.

### [Brief Description of Drawings]

[Fig. 1A]

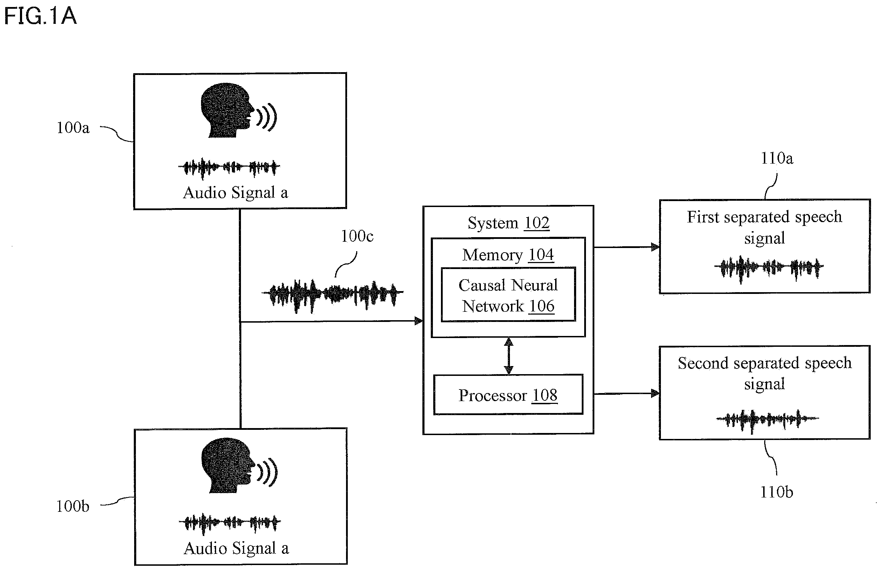

   FIG. 1A is a diagram for illustrating a working environment of a system for training a causal neural network for a streaming audio processing application, according to various embodiments.
[Fig. 1B]

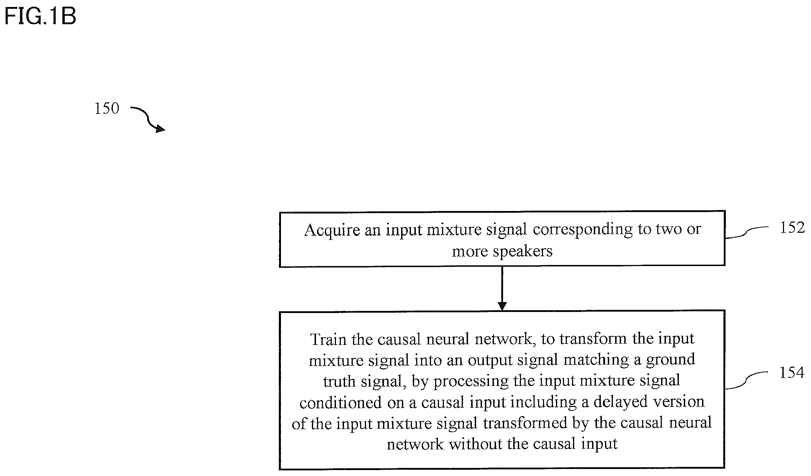

   FIG. 1B illustrates a flowchart for a training process of the causal neural network for the streaming audio processing application, according to various embodiments.
[Fig. 2]

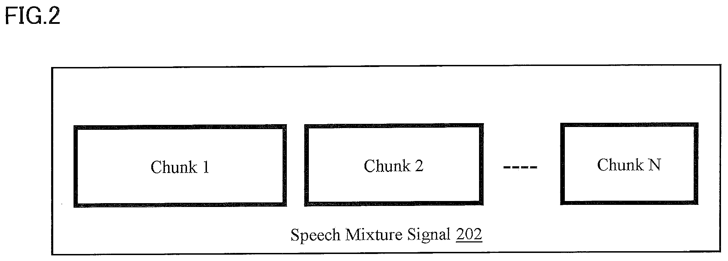

   FIG. 2 illustrates a speech mixture signal for training the causal neural network, according to various embodiments.
[Fig. 3A]

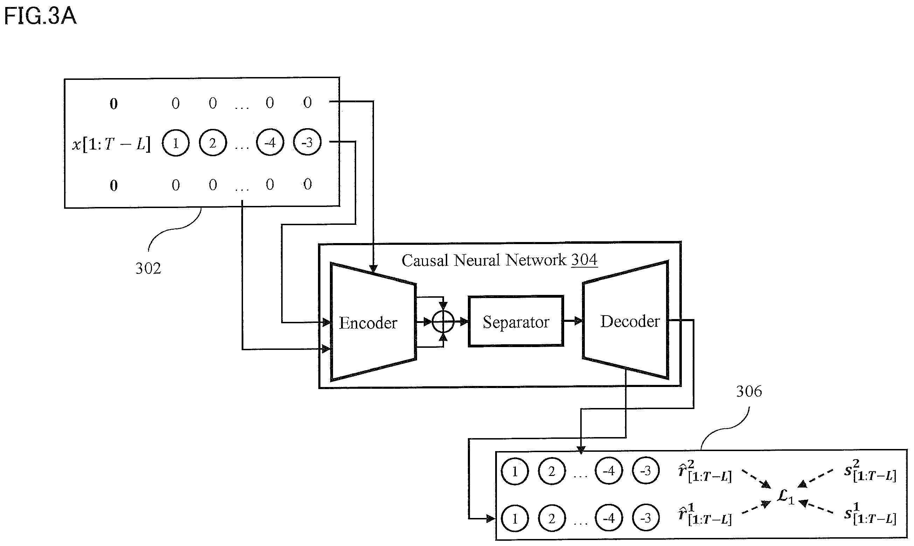

   FIG. 3A illustrates an architecture of two-pass pseudo-autoregressive Siamese training for the causal neural network, according to various embodiments.
[Fig. 3B]

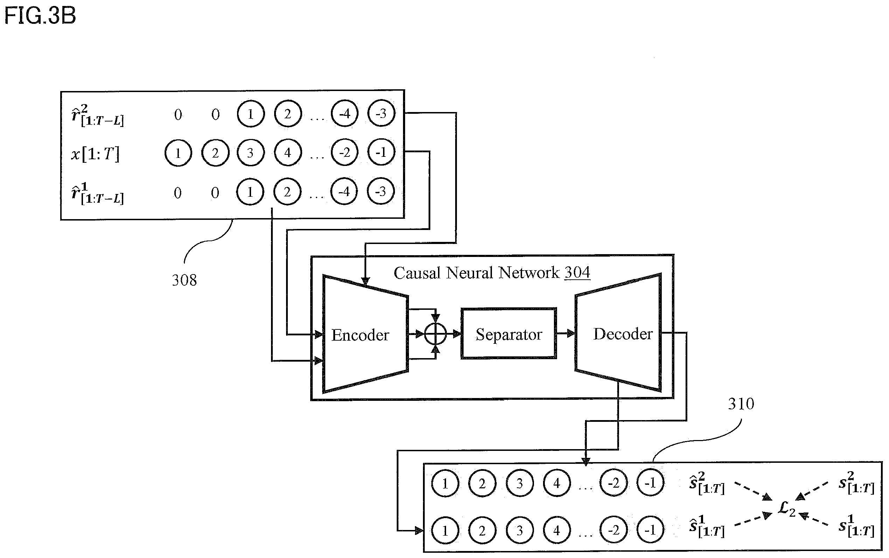

   FIG. 3B illustrates an architecture of two-pass pseudo-autoregressive Siamese training for the causal neural network, according to various embodiments.
[Fig. 4A]

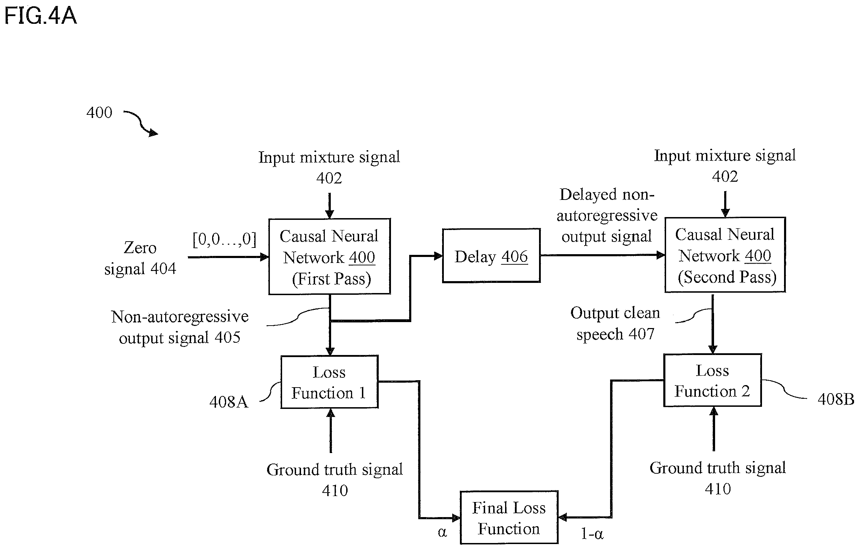

   FIG. 4A illustrates a flow diagram of the two-pass pseudo autoregressive Siamese training for the causal neural network, according to various embodiments.
[Fig. 4B]

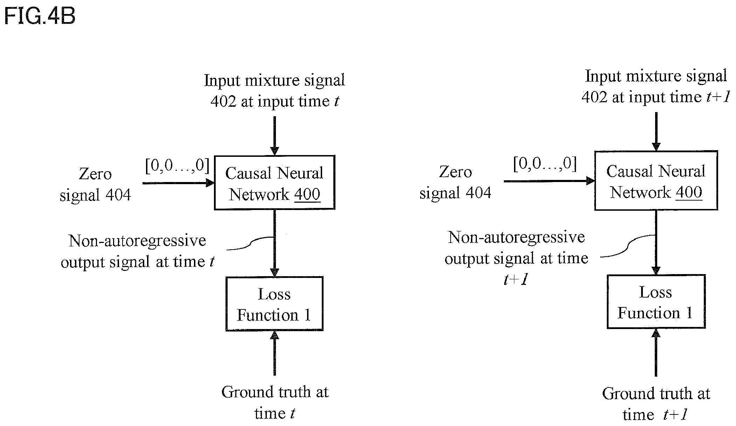

   FIG. 4B illustrates a first pass of the two-pass pseudo autoregressive Siamese training, according to various embodiments.
[Fig. 4C]

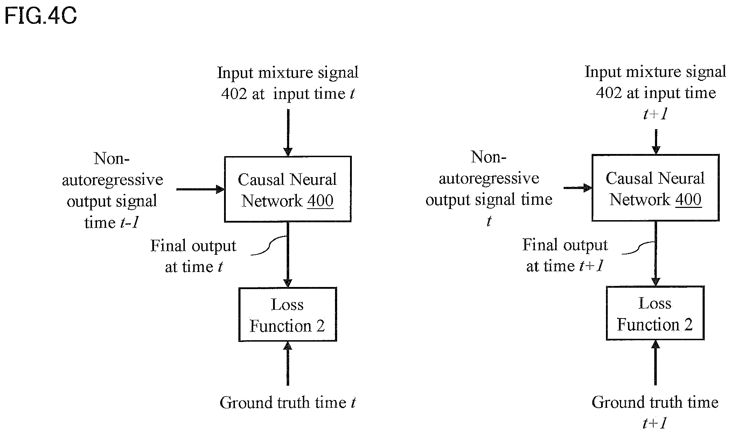

   FIG. 4C illustrates a second pass of the two-pass pseudo autoregressive Siamese training, according to various embodiments.
[Fig. 5]

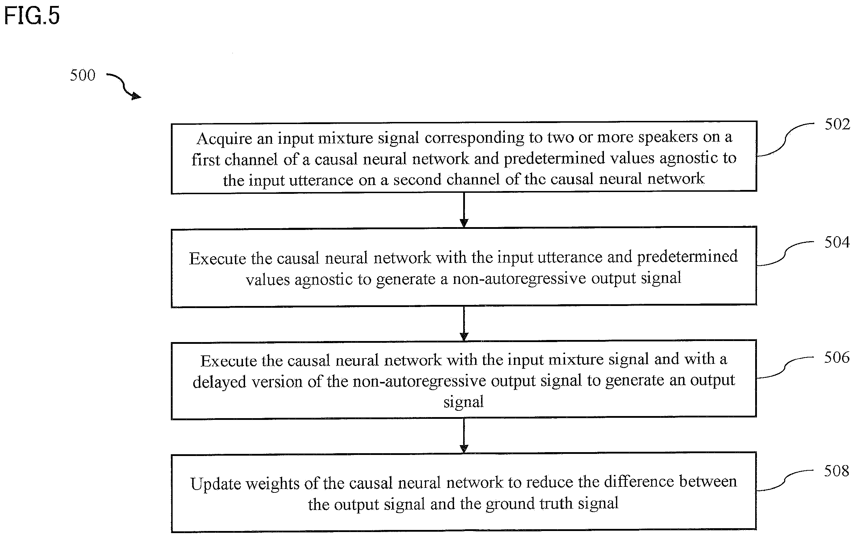

   FIG. 5 illustrates a detailed flowchart for the two-pass pseudo autoregressive Siamese training, according to various embodiments.
[Fig. 6]

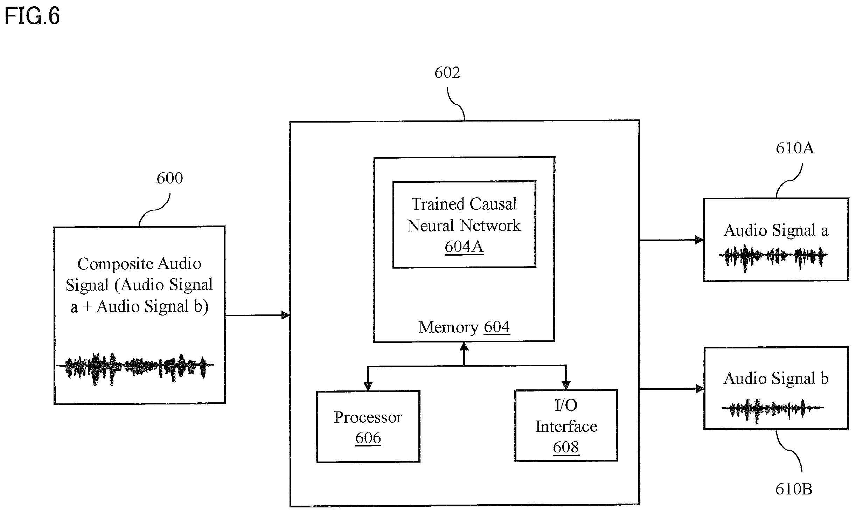

   FIG. 6 illustrates online speech separation using the two-pass pseudo autoregressive Siamese trained causal neural network, according to various embodiments.
[Fig. 7]

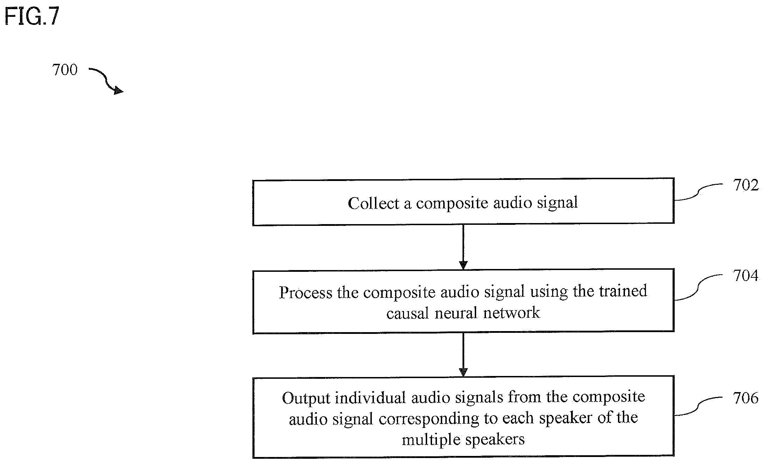

   FIG. 7 illustrates a flowchart for online speech separation using the pseudo autoregressive Siamese trained causal neural network, according to various embodiments.
[Fig. 8]

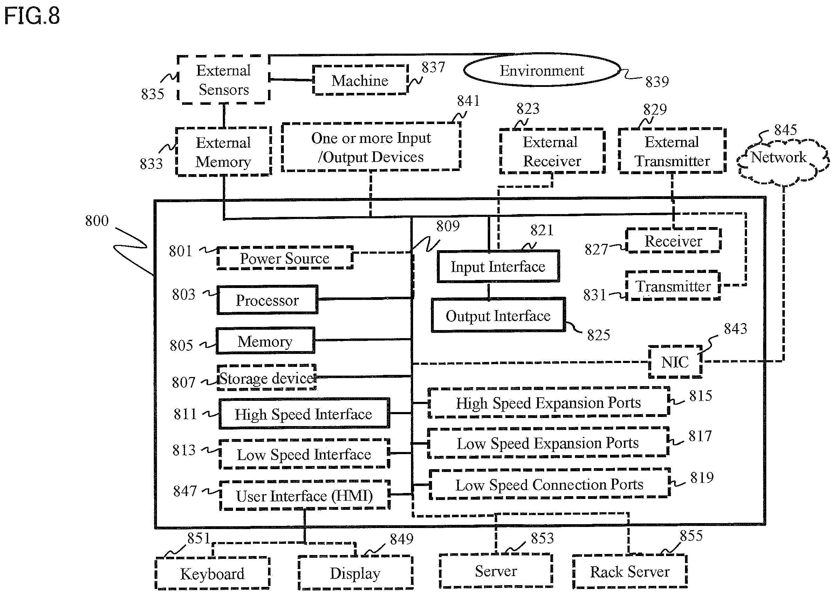

   FIG. 8 shows a schematic diagram of some components of a system for training a causal neural network or executing a trained causal neural network, in accordance with some embodiments.

While the above-identified drawings set forth presently disclosed embodiments, other embodiments are also contemplated, as noted in the discussion. This disclosure presents illustrative embodiments by way of representation and not limitation. Numerous other modifications and embodiments can be devised by those skilled in the art which fall within the scope of the presently disclosed embodiments.

### [Description of Embodiments]

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements without departing from the scope of the subject matter disclosed as set forth in the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like-reference numbers and designations in the various drawings may indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Sound signals mostly exist in combinations or mixtures of sounds produced from multiple sources. For example, speech signals often overlap with each other in natural scenes. To a great extent, the human brain has an inherent capability to separate such signals according to their sources. However, when it comes to machines such as those operating on the principles of speech processing, the current quality of speech separation is not suitable for several real-world applications such as speaker localization or speech recognition, for which the speech separation serves as a crucial frontend.

The advancements in deep learning techniques have greatly helped in improving the speech processing quality as compared to conventional filtering-based techniques. However, the incorporation of advanced deep learning techniques in this regard has met with its own share of challenges. The majority of speech separation and extraction networks are primarily designed and evaluated for offline processing. A major drawback of such approaches stems from the fact that such offline networks are usually capable of utterance-level processing and hence find limited applications. Online streaming models typically emerge as causal modifications of offline networks, but they suffer from significant degradation of separation quality because they no longer have access to future inputs. Other solutions, which attempt to compensate for this degradation in quality, suffer from tedious training requirements.

Some example embodiments provide pseudo-autoregressive Siamese training of a neural network for online speech separation. This training scheme is based on utterance level training of the neural network, where an audio stream signal comprises multiple utterances by multiple speakers that can overlap each other, the combination of which is referred to as an input utterance or input mixture signal. The audio stream signal can be split into multiple potentially overlapping segments or chunks and each chunk includes one or more audio frames of the audio stream signal, such as the frames obtained from a time-frequency transform such as the short-time Fourier transform or a learned transform. In particular, the utterance level training of the neural network encompasses processing the entire utterance at a time instead of chunk-by-chunk, where the processing of one chunk is dependent on the processing of a previous chunk having partially or entirely completed. As a result, an efficient training method is achieved for online speech separation as compared to the conventional training schemes for speech separation where the training is performed by processing each individual chunk at a time.

FIG. 1A is a diagram for illustrating a working environment of a system 102 for training a causal neural network for a streaming audio processing application, where various embodiments of the present disclosure may operate. As shown, the working environment includes a plurality of speakers (e.g., a first speaker 100a and a second speaker 100 b) and the system 102.

In the example of FIG. 1A, the first speaker 100a may provide an audio signal A and the second speaker 100b may provide an audio signal B. According to some embodiments, the audio signals A and B may be generated by suitable sensors such as microphones which transform speech from the respective speaker into a corresponding audio signal. According to some other embodiments, a microphone may capture the speech from multiple speakers and generate a single mixture audio signal corresponding to the multiple speakers. Thus, irrespective of how the speech from the first and second speakers is captured, the system may receive an audio mixture signal corresponding to the speech from the first and second speakers. In some examples, the audio mixture signal is a combination of the audio signal A and the audio signal B and is transmitted to the system 102 as an input mixture signal 100c. The details regarding the input mixture signal 100c are explained further with respect to description of FIG. 2.

Further, referring to FIG. 1A, the system 102 acquires the input mixture signal 100c that includes the mixture of speech corresponding to the plurality of speakers, wherein the system 102 includes a memory104 and a processor 108. The memory 104 includes a volatile memory area (e.g., a working area) for temporarily storing a program code and a work memory in executing arbitrary programs. For example, the memory 104 is configured as a volatile memory device such as a dynamic random-access memory (DRAM) or a static random-access memory (SRAM). The memory 104 further includes a non-volatile memory area. For example, the memory 104 is embodied in a nonvolatile memory device such as a read only memory (ROM), a hard disk, or a solid-state drive (SSD).

Further, the memory 104 also stores a neural network (e.g., the causal neural network 106). The neural network may be a deep neural network (DNN), convolutional neural network (CNN), long short-term memory (LSTM), Transformer, or Conformer structure, etc. The details regarding the structure of the causal neural network 106 are explained further with respect to description of FIG. 3. In the present embodiment, the causal neural network 106 is trained to perform speech separation. In particular, supervised training is performed on the causal neural network 106 to perform the speech separation.

Further, referring to FIG. 1A, the processor 108 may comprise suitable logic, circuitry, interfaces that may be configured to execute a set of instructions stored in the memory 106. The processor 108 may be implemented based on a number of processor technologies known in the art. The processor 108 is one example of a computer. The processor 108 may include, for example, a central processing unit (CPU), a field-programmable gate array (FPGA), and a graphics processing unit (GPU). Note that the processor 108 may be configured of at least one of the CPU, FPGA, and GPU, or the CPU and FPGA, the FPGA and GPU, the CPU and GPU, or all of the CPU, FPGA, and GPU. Note that the processor 108 may be configured of one chip or multiple chips. Furthermore, all or some of the functions of the processor 108 may be provided at a server device (e.g., a cloud server device) not shown.

The processor 108 is configured to train the causal neural network 106 to generate separated speech signals 110a and 110b (i.e., a first separated speech signal 110a and a second separated speech signal 110b) from the input mixture signal 100c, which is described further in conjunction with description of FIG. 1B.

FIG. 1B illustrates a flowchart 150 for a training process of the causal neural network 106 for a streaming audio processing application. The training process may be embodied as a set of computer-executable instructions which are stored in the memory 104 and are executed by the processor 108 to train the causal neural network 106.

At step 152, the processor 108 acquires the input mixture signal 100c corresponding to two or more speakers (e.g., the first speaker 100a and the second speaker 100b).

Next, at step 154, the processor 108 trains the causal neural network 108 to transform the acquired input mixture signal 100c into an output signal (e.g., separated speech signals 110a and 110b) that matches a ground truth signal. To that end, the processor 108 processes the acquired input mixture signal 100c conditioned on a causal input that includes a delayed version of the output signal obtained by transforming the input mixture signal 100c using the causal neural network 106 without the causal input.

As a result, the causal neural network 106 is trained to separate the speech signals (e.g., separated speech signals 110a and 110b), wherein the first separated speech signal 110a corresponds to the audio signal A and the second separated speech signal 110b corresponds to the audio signal B. The details of training of the causal neural network 106 are described further with respect to description of FIGs. 3-4C.

### [Input Mixture Signal]

FIG. 2 illustrates a speech mixture signal 202, according to various embodiments of the present disclosure. The speech mixture signal 202 corresponds to a combination of a plurality of audio signals (e.g., the audio signal A and the audio signal B) from a plurality of speakers (e.g., the first speaker 100a and the second speaker 100b). The speech mixture signal 202 includes a plurality of audio chunks (or simply "chunks") 1, 2, ... N. input mixture signal. According to some embodiments, each chunk corresponds to one or more frames of the speech mixture signal 202.

Accordingly, in some embodiments of the present disclosure, the causal neural network 106 is trained on utterance level (that is the neural network is trained on a combination of a plurality of chunks) at a time instead of training the neural network using a single chunk at a time involving the result of the processing by the neural network of one or more previously processed chunks. This results in a faster training of the neural network as compared to conventional approaches. As a result, a faster speech separation process can be achieved that facilitates an efficient speech separation in real time audio streaming applications.

### [Two-Pass Pseudo Autoregressive Siamese Training (PARIS)]

FIG. 3 illustrates an architecture of two-pass pseudo-autoregressive Siamese training (PARIS) for a causal neural network 304, according to various embodiments of the present disclosure. The causal neural network 304 corresponds to the causal neural network 106 in FIG. 1A.

As shown in FIG. 3, in each pass, the causal neural network 304 comprises an encoder, a separator, and a decoder. Also, FIG. 3 shows input signals 302 including a mixture signal denoted by *x* consisting of *T* audio samples and a block of size *L* (e.g., *L*=2) audio samples, intermediate outputs denoted by *r̂* (also referred to as "non-autoregressive output signal") from a first training pass through the causal neural network 304, final output denoted by *ŝ* (also referred to as "the output signal" as described in FIG. 1A) from a second training pass through the causal neural network 304, and a ground-truth utterance denoted by *s* that is a clean speech, and a superscript that denotes speaker index.

Further, FIG. 3 shows a top row and a bottom row, wherein the top row indicates a first copy of the causal neural network 304 (i.e., a first instantiation of the causal neural network 304). The first copy of the causal neural network 304 is a combination of input channels to receive the input signals 302, the causal neural network 304, and output channels to output intermediate output *r̂*. Also, the first copy of the causal neural network 304 corresponds to the first training pass (also referred as "a first pass", hereinafter).

The bottom row of FIG. 3 indicates a second copy of the causal neural network 304 that is a combination of the input channels to receive the mixture signal x and the intermediate outputs *r̂*, the causal neural network 304, and the output channels to output the final output *ŝ* as final separated speech signals. Also, the second copy of the causal neural network 304 corresponds to the second training pass (also referred as "a second pass", hereinafter).

Some embodiments of the present disclosure perform the pseudo-autoregressive Siamese training by using multiple copies of the causal neural network 304 with shared weights to generate an online autoregressive speech separation model that is configured to separate audio signals from a mixture speech signal. In such a case, the first copy of the causal neural network 304 is used to produce the non-autoregressive output signal *r̂* and the second copy of the causal neural network 304 is used to generate the output signal *ŝ*, wherein the execution of the second copy of the causal neural network 304 is delayed from the execution of the first copy of the causal neural network 304 with an extent of a delay. As shown in the bottom row of FIG. 3, to define the extent of the delay, the non-autoregressive output signal *r̂* at an input channel of the second copy is padded with zeros.

Further, the encoder of the causal neural network 304 is a causal convolutional layer that receives the input signals 302 including the mixture signal x and predetermined values agnostic to the mixture signal x in the first pass, wherein the predetermined values are equal to zero. On the other hand, during the second pass, the encoder receives the inputs such as the mixture signal x and the delayed intermediate output *r̂*. The encoder processes each of these inputs separately before concatenating the learned representations output by the encoder together along the channel dimension.

Further, the separator of the causal neural network 304 is a unidirectional recurrent network such as an LSTM, or self-attention layers such as those used in a transformer, where attention is configured such that frames of a current chunk can only attend to frames of the current chunk or past chunks. The separator receives the learned representations output from the encoder to generate separated outputs for the learned representations.

Further, the decoder of the causal neural network 304 consists of a transposed convolutional layer that converts learned representations back into audio signals as the intermediate output *r̂* during the first pass and the final output *ŝ* during the second pass, where a number of signals from the final output *ŝ* and a number of signals from the intermediate output *r̂* from the decoder are equal to a number of speakers in the mixture signal *x*.

Further, the causal neural network 304 includes a first input channel for acquiring the mixture signal x and a second input channel for acquiring a conditioning input such as the predetermined values agnostic to the mixture signal x in the first pass or the non-autoregressive output signal *r̂* in the second pass.

In particular, the first input channel acquires the input mixture utterance x that is the combination of two people speaking simultaneously. Further, the second input channel acquires either the predetermined values agnostic to the input mixture utterance *x* in the first pass or the non-autoregressive second speech utterance *r̂* in the second pass.

Further, the second input channel includes multiple sub-channels, wherein a number of such sub-channels of the second input channel is based on a number of speakers associated with the mixture signal x. For the purpose of illustration, the case of two speakers is here considered as an example without limitation. The second input channel then includes a first sub-channel and a second sub channel, wherein these two-sub channels are configured to acquire the predetermined values agnostic to the mixture signal *x* in the first pass and acquire the non-autoregressive output signal *r̂* in the second pass.

During the first pass, each of the first sub-channel and the second sub-channel of the second input channel acquires the predetermined values agnostic to the mixture signal *x*, wherein the predetermined values are equal to zero such that the non-autoregressive output signal *r̂* is output by the causal neural network 304 in the first pass without any causal input.

Further, as shown in FIG. 3, the non-autoregressive output signal *r̂* includes multiple sub-channels, wherein a number of such sub-channels of the non-autoregressive output signal *r̂* is based on a number of speakers (e.g., people) associated with the mixture signal *x*. For instance, the mixture signal *x* corresponds to two speakers. In such a case, the non-autoregressive output signal *r̂* includes two sub-channels, one for each speaker. Accordingly, the first sub-channel of the two-sub channels includes a non-autoregressive first speech signal ${\hat{r}}_{\left[0:T\right]}^{1}$ and a second sub-channel of the two sub-channels includes a non-autoregressive second speech signal ${\hat{r}}_{\left[0:T\right]}^{2}$ separated from the input mixture utterance *x* in the first pass, where the superscripts indicate a range of indices according to Python notation, wherein the first index of a range indicates the starting index and the second index of a range indicates the index immediately after the ending index.

Further, during the second pass, the first input channel acquires the mixture signal *x*, and the second input channel acquires a causal input that is a delayed version of the non-autoregressive output signal *r̂* as the conditioning input to generate the output signal *ŝ*.

In particular, the first sub-channel of the second input channel acquires a delayed version of the non-autoregressive first speech signal ${\hat{r}}_{\left[0:T-L\right]}^{1}$, where the delay is implemented by zero-padding on the left, that is at the start, by *L* samples, and the second sub-channel of the second input channel acquires a similarly delayed version of the non-autoregressive second speech signal ${\hat{r}}_{\left[0:T-L\right]}^{2}$*.* The causal neural network 304 processes the mixture signal *x*, the delayed version of the non-autoregressive first speech signal ${\hat{r}}_{\left[0:T-L\right]}^{1}$*,* and the delayed version of the non-autoregressive second speech signal ${\hat{r}}_{\left[0:T-L\right]}^{2}$ to generate the output signal *ŝ*. The output signal *ŝ* includes two sub-channels, wherein the first sub-channel includes a first speech signal ${\hat{S}}_{\left[0:T\right]}^{1}$ and the second sub-channel includes a second speech signal ${\hat{S}}_{\left[0:T\right]}^{2}$ separated from the mixture signal *x*. The case of more than two speakers can be similarly handled by having as many sub-channels as the considered number of speakers.

Further details regarding the first pass and the second pass of the two-pass pseudo autoregressive training are described further in conjunction with FIG. 4A, FIG. 4B, and FIG. 4C.

FIG. 4A illustrates a flow diagram of the two-pass pseudo autoregressive training, where an entire input mixture signal is processed during the two-pass pseudo autoregressive training as opposed to the conventional chunk-by-chunk processing.

To that end, an input mixture signal 402 is provided to both copies of the causal neural network 400 in two passes - the first pass and the second pass as explained above with reference to FIG. 3. The causal neural network 400 corresponds to the causal neural network 106 in FIG. 1A and the causal neural network 304 in FIG. 3. Further, FIG. 4B illustrates a first pass of the two-pass pseudo autoregressive training while FIG. 4C illustrates a second pass of the two-pass pseudo autoregressive training.

The causal neural network 400 includes two input channels referred to as a first input channel and a second input channel having a first sub-channel and a second sub-channel, wherein the details regarding the first input channel and the second input channel are explained above with reference to FIG. 3.

Referring back to FIG. 4A and FIG. 4B, during the first pass, the first input channel acquires an input mixture signal 402 (similar to the mixture signal x in FIG. 3) of length T samples. Further, during the first pass, the second input channel of the causal neural network 400 acquires predetermined values agnostic to the input mixture signal 402.

As shown in FIG. 4A and FIG. 4B, to produce an intermediate output signal *r̂* by the causal neural network 400 without a causal input in the first pass, the acquired predetermined values are equal to zero (hereinafter referred as "a zero signal 404"). Hence, in the first pass, the causal neural network 400 is essentially operating in a non-autoregressive mode. As a result, the intermediate output *r̂* is output as the non-autoregressive output signal *r̂* by the causal neural network 400. The non-autoregressive output signal *r̂* includes a number of speech signals (e.g., ${\hat{r}}_{\left[0:T\right]}^{1}$ and ${\hat{r}}_{\left[0:T\right]}^{2}$ as described above with reference to FIG. 3). When processing the t^{th} chunk, only the signal from the start up to the t^{th} chunk is accessible by the causal neural network 400.

Further, the estimated clean speech is delayed such that an intermediate output block t can be used as an input to the second pass through the second channel of the causal neural network 400 for the next block *t+1* as illustrated in FIG. 4C.

Referring to FIG. 4C, during the second pass, the first channel acquires the same input mixture signal 402 and the second channel acquires the delayed non-autoregressive output signal by the causal neural network 400 in the first pass. The causal neural network 400 processes the input mixture signal 402 and the delayed non-autoregressive output signal to produce an output clean speech (i.e., the output signal *ŝ* in FIG. 3) as separated speech signals ${\hat{S}}_{\left[0:T\right]}^{1}$ and ${\hat{S}}_{\left[0:T\right]}^{2}$.

In some embodiments, the multiple copies of the causal neural network 400 with shared weights are trained using the pseudo-autoregressive Siamese training. For instance, FIG. 4A shows the causal neural network 400 in the first pass and the second pass. In some embodiments, the training can be executed using two identical copies of the causal neural network 400, wherein a first copy of the causal neural network is used to produce the non-autoregressive output signal *r̂* and a second copy of the causal neural network is used to generate the output signal *ŝ*.

Further, during each of the first pass and the second pass, a respective loss function is determined using the ground truth signal *s*, which consists of two ground-truth signals *s*¹ and *s*², one for each speaker. These loss functions consider both the quality of the non-autoregressive output signal *r̂* by the first pass and the output signal (clean speech) *ŝ* from the second pass.

In particular, the causal neural network 400 includes loss functions 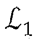 for the first pass and 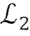 for the second pass that are permutation invariant in a speaker separation case, that is the pair of ground truth signals *s*¹ and *s*² is compared to the pair of non-autoregressive output signal *r̂* produced by the first pass or the output signal *ŝ* produced by the second pass, such that all possible associations without repetition between an element of the pair of ground-truth signals and an element of the pair of non-autoregressive output signal or output signal are considered, and only the permutation with the lowest loss function value is back propagated for the training of the causal neural network 400.

In some embodiments, both outputs from the first pass and second pass are constrained with a loss function, for which the signal-to-noise ratio (SNR) is maximized between network outputs (i.e., output *r̂* from the first copy of the causal neural network 400 and output *ŝ* from the second copy of the causal neural network 400) and signals of the ground truth utterance s (called as *s¹* and *s²),* as follows: ${L}_{1} = - 10 {log}_{10} \left(\frac{{\left‖s\right‖}^{2}}{{\left‖\hat{r}-s\right‖}^{2}}\right)$ (1) ${L}_{2} = - 10 {log}_{10} \left(\frac{{\left‖s\right‖}^{2}}{{\left‖\hat{s}-s\right‖}^{2}}\right)$ (2)

Further, the loss functions 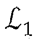 and 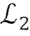 are applied to outputs of the first pass and the second pass, respectively.

The overall loss is the weighted sum of the two losses with a scalar α. ${L}_{overall} = α ∗ {L}_{1} + \left(1-α\right) ∗ {L}_{2}$

In some other embodiments, the loss function can be some other comparison function such as mean-squared error, mean absolute error, etc.

Further, the two-pass training scheme uses the weights in each pass, wherein these weights are shared between the two passes of the causal neural network 400 as shown in FIG. 4A. In particular, the weights of the causal neural network 400 are updated with back-propagation to reduce a compound loss function including a first loss term 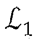 of an error between the non-autoregressive output signal *r̂* and the ground truth signal s and a second loss term 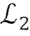 of an error between the output signal *ŝ* and the ground truth signal *s*. This improves upon the conventional teacher-forcing and naive autoregressive training as the causal neural network 400 learns how to accurately handle imperfections in the output signal *ŝ*, by taking the delayed first pass non-autoregressive output signal *r̂* as inputs to the second pass. Additionally, during the first pass, the causal neural network 400 is configured to output high quality output signals without an informative signal in the second input channel, since only the uninformative zero signal (i.e., the zero signal 404) is used as an input.

FIG. 5 illustrates a detailed flowchart 500 for the two-pass pseudo-regressive Siamese training, according to various embodiments of the present disclosure. The training process corresponds to a set of computer-executable instructions which are stored in a memory (e.g., the memory 104) and are executed by a processor (e.g., the processor 108) to train a causal neural network (e.g., the causal neural network 106, the causal neural network 304, or the causal neural network 400) to generate an online autoregressive speech separation model. The training process is described in conjunction with FIG. 4A, FIG. 4B, and FIG. 4C. The training process starts at step 502.

At step 502, the processor acquires an input mixture signal (i.e., the input mixture signal 402) corresponding to two or more speakers on a first channel of the causal neural network 400 and predetermined values (i.e., zero signal 404) agnostic to the input mixture signal on a second channel of the causal neural network 400.

Next, at step 504, the processor executes the causal neural network 400 with the input mixture signal and predetermined values agnostic to the input mixture signal to generate a non-autoregressive output signal *r̂*. This step corresponds to the first pass as described above in description of FIG. 4A and FIG. 4B.

Next, at step 506, the processor executes the causal neural network 400 with the input mixture signal (i.e., the input utterance 402) and with a delayed version of the non-autoregressive output signal *r̂* to generate an output signal as a set of separated speech signals (also termed as clean speech estimate or the output signal *ŝ*). This step corresponds to the second pass as described above in description of FIG. 4A and FIG. 4C.

Next, at step 508, the processor updates weights of the causal neural network 400 to reduce an error between the output signal *ŝ* and the ground truth signal s. In particular, the weights of the causal neural network 400 are updated with back-propagation to reduce a compound loss function including a first loss term of an error between the non-autoregressive output signal and the ground truth signal and a second loss term of an error between the output signal and the ground truth signal.

Accordingly, by training the causal neural network 400 on utterance level inputs in two passes as described above, a faster speech separation training process can be achieved that facilitates an effective speech separation in real time audio streaming applications as compared to a neural network trained by chunk-by-chunk processing of audio inputs.

### [Online Speech Separation using Trained Causal Neural Network]

FIG. 6 illustrates online speech separation from a composite audio signal 600 using a two-pass pseudo autoregressive Siamese trained causal neural network 604A, according to various embodiments of the present disclosure. As shown in FIG. 6, an application device 602 (or an application system) includes a memory 604, a processor 606, and an Input/Output (I/O) interface 608. According to some embodiments, the application device 602 may correspond to hearing aids, speech transcription systems, video conferencing systems, or any device or system where real-time speech separation is desired.

The memory 604 includes a volatile memory area (e.g., a working area) for temporarily storing a program code and a work memory in executing arbitrary programs. Further, the memory 604 also stores the two-pass pseudo autoregressive trained causal neural network 604A. The processor 606 fetches programs and codes from the memory 604 including the trained causal neural network 604A to execute speech separation on the composite audio signal 600 received via the interface 608.

The causal neural network 604A that is trained using two-pass pseudo autoregressive training as described above in FIG. 3, FIG. 4A, FIG. 4B, and FIG. 4C may be a deep neural network (DNN), convolutional neural network (CNN), long short-term memory (LSTM), Transformer, or Conformer structure, etc. The two-pass pseudo autoregressive trained causal neural network 604A is stored in the memory 604 as an online autoregressive speech separation model for separating speech signals for each speaker associated with input mixed speech signals.

The processor 606 is configured to utilize the two-pass pseudo autoregressive trained causal neural network 604A to generate separated speech signals (i.e. the audio signal a 610A and the audio signal b 610B) from the composite audio signal 600.

Further, the I/O interface 608 may comprise suitable logic, circuitry, interfaces that may be configured to transmit and receive information such as the composite audio signal 600, separated speech signals, and the like.

The real-time speech separation operation by the two-pass pseudo autoregressive trained causal neural network 604A in the application device 602 is described further with respect to FIG. 7.

FIG. 7 illustrates a flowchart 700 for online speech separation process using the two-pass pseudo autoregressive Siamese trained causal neural network 604A, according to various embodiments of the present disclosure. The process is executed by the processor 606.

At step 702, the processor 606 acquires the composite input signals s via the I/O interface 608, wherein the composite input signal 600 includes speech signals from a plurality of speakers.

Further, at step 704, the processor 606 processes the composite audio signal 600 by using the two-pass pseudo-regressive trained causal neural network 604A. In particular, the processor 606 executes the two-pass pseudo autoregressive trained causal neural network 604A to generate individual separated audio signals 610A (separated audio signal "a") and 610B (separated audio signal "b") from the composite audio signal 600, wherein each of the individual separated audio signals 610A and 610B corresponds to a respective speaker of the plurality of speakers.

Further, at step 706, the processor, via the I/O interface 608, outputs the individual separated audio signals 610A and 610B from the composite audio signal 600 corresponding to each respective speaker of the multiple speakers.

Since the separated audio signals corresponding to each of the plurality of speakers are generated using the two-pass pseudo autoregressive trained causal neural network 604A, the speech separation process is performed in real time with high accuracy.

FIG. 8 shows a schematic diagram of some components of a system 800 for training the causal neural network 106 of FIG. 1A or executing the trained causal neural network 604A of FIG. 6, in accordance with some embodiments of the present disclosure. The system 800 includes a power source 801, a processor 803, a memory 805, a storage device 807, all connected to a bus 809. Further, a high-speed interface 811, a low-speed interface 813, high-speed expansion ports 815 and low speed connection ports 817, can be connected to the bus 809. In addition, a low-speed expansion port 819 is in connection with the bus 809. Further, an input interface 821 can be connected via the bus 809 to an external receiver 823 and an output interface 825. A receiver 827 can be connected to an external transmitter 829 and a transmitter 831 via the bus 809. Also connected to the bus 809 can be an external memory 833, external sensors 835, machine(s) 837, and an environment 839. Further, one or more external input/output devices 841 can be connected to the bus 809. A network interface controller (NIC) 843 can be adapted to connect through the bus 809 to a network 845, wherein data or other data, among other things, can be rendered on a third-party display device, third party imaging device, and/or third-party printing device outside of the AI system 800.

The memory 805 may store instructions that are executable by the system 800 and any data that can be utilized by the methods and systems of the present disclosure. The memory 805 can include random access memory (RAM), read only memory (ROM), flash memory, or any other suitable memory systems. The memory 805 can be a volatile memory unit or units, and/or a non-volatile memory unit or units. The memory 805 may also be another form of computer-readable medium, such as a magnetic or optical disk.

The storage device 807 can be adapted to store supplementary data and/or software modules used by the computer device 800. The storage device 807 can include a hard drive, an optical drive, a thumb-drive, an array of drives, or any combinations thereof. Further, the storage device 807 can contain a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, the processor 803), perform one or more methods, such as those described above.

In an embodiment, the storage device 807 is configured to store a neural network such as the neural network 106 of FIG. 1A or the trained causal neural network 604A of FIG. 6. The memory 805 may store instructions that cause the processor 803 to execute the neural network, train the neural network, or both.

The system 800 can be linked through the bus 809, optionally, to a display interface or user Interface (HMI) 847 adapted to connect the AI system 800 to a display device 849 and a keyboard 851, wherein the display device 849 can include a computer monitor, camera, television, projector, or mobile device, among others. In some implementations, the system 800 may include a printer interface to connect to a printing device, wherein the printing device can include a liquid inkjet printer, solid ink printer, large-scale commercial printer, thermal printer, UV printer, or dye-sublimation printer, among others.

The high-speed interface 811 manages bandwidth-intensive operations for the system 800, while the low-speed interface 813 manages lower bandwidth-intensive operations. Such allocation of functions is an example only. In some implementations, the high-speed interface 811 can be coupled to the memory 805, the user interface (HMI) 845, and to the keyboard 851 and the display 849 (e.g., through a graphics processor or accelerator), and to the high-speed expansion ports 815, which may accept various expansion cards via the bus 809. In an implementation, the low-speed interface 813 is coupled to the storage device 807 and the low-speed expansion ports 817, via the bus 809. The low-speed expansion ports 817, which may include various communication ports (e.g., USB, Bluetooth, Ethernet, wireless Ethernet) may be coupled to the one or more input/output devices 841. The system 800 may be connected to a server 853 and a rack server 855. The system 800 may be implemented in several different forms. For example, the system 800 may be implemented as part of the rack server 855.

### [Embodiments]

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements without departing from the scope of the subject matter disclosed as set forth in the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Further, embodiments of the present disclosure and the functional operations described in this specification can be implemented in digital electronic circuitry, in tangibly embodied computer software or firmware, in computer hardware, including the structures disclosed in this specification and their structural equivalents, or in combinations of one or more of them. Further some embodiments of the present disclosure can be implemented as one or more computer programs, i.e., one or more modules of computer program instructions encoded on a tangible non transitory program carrier for execution by, or to control the operation of, data processing apparatus. Further still, program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

According to embodiments of the present disclosure the term "data processing apparatus" can encompass all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. Computers suitable for the execution of a computer program include, by way of example, can be based on general or special purpose microprocessors or both, or any other kind of central processing unit. Generally, a central processing unit will receive instructions and data from a read only memory or a random-access memory or both. The essential elements of a computer are a central processing unit for performing or executing instructions and one or more memory devices for storing instructions and data.

Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The scope of the invention is defined as per the appended claims.

## Claims

1. A method for supervised training of a causal neural network (106) for a streaming audio processing application, the method comprising:
acquiring an input mixture signal (100c) including speech by two or more speakers; and
training the causal neural network (106), to transform the input mixture signal (100c) into an output signal (110a, 110b) matching a ground truth signal (s), by processing the input mixture signal (100c) conditioned on a causal input including a delayed version of the input mixture signal (100c) transformed by the causal neural network (106) without the causal input.

2. The method of claim 1, wherein the causal neural network (106) includes a first input channel for acquiring the input mixture signal (100c) and a second input channel for acquiring a conditioning input, wherein the training comprises:
executing the causal neural network (106) with the input mixture signal (100c) acquired on the first input channel and with predetermined values agnostic to the input mixture signal (100c) acquired on the second input channel as the conditioning input to generate a non-autoregressive version of the output signal generated by the causal neural network (106) without the causal input;
executing the causal neural network (106) with the input mixture signal (100c) acquired on the first input channel and with a delayed version of the non-autoregressive output signal acquired on the second input channel as the conditioning input to generate the output signal (110a, 110b); and
updating weights of the causal neural network (106) to reduce an error between the output signal (110a, 110b) and the ground truth signal (s).

3. The method of claim 2, wherein the weights of the causal neural network (106) are updated with back-propagation to reduce a compound loss function including a first loss term of an error between the non-autoregressive output signal and the ground truth signal and a second loss term of an error between the output signal (110a, 110b) and the ground truth signal (s).

4. The method of claim 2, wherein the predetermined values are equal to zero, and wherein the delayed version of the non-autoregressive output signal is padded with zeros defining an extent of the delay.

5. The method of claim 4, wherein the training uses a pseudo-autoregressive Siamese training of multiple copies of the causal neural network (106) with shared weights, wherein a first copy of the causal neural network (106) is used to produce the non-autoregressive output signal and a second copy of the causal neural network (106) is used to generate the output signal (110a, 110b), wherein the execution of the second copy is delayed from the execution of the first copy with the extent of the delay.

6. The method of claim 2, wherein the streaming audio processing application includes a speech separation, wherein the input mixture signal (100c) includes a mixture of speech, wherein the second input channel includes two sub-channels, wherein the non-autoregressive output signal includes two sub-channels, wherein the first sub-channel includes a non-autoregressive first speech utterance and the second sub-channel includes a non-autoregressive second speech utterance separated from the mixture, wherein the acquiring of the delayed version of the non-autoregressive output signal on the second input channel as the conditioning input is such that a delayed version of the non-autoregressive first speech utterance is acquired on the first sub-channel of the second input channel, and a delayed version the non-autoregressive second speech utterance is acquired on the second sub-channel of the second input channel, wherein the output signal includes two sub-channels, wherein the first sub-channel includes a first speech utterance and the second sub-channel includes a second speech utterance separated from the mixture.

7. The method of claim 1, wherein the input mixture signal (100c) includes a plurality of chunks of audio frames or
wherein the output signal includes a separated speech signal corresponding to each speaker of the two or more speakers.

8. An audio processing method, comprising:
collecting a composite audio signal (600) comprising a mixture of utterances from multiple speakers;
processing the composite audio signal (600) using the causal neural network (106, 604A) trained according to the method of claim 1; and
outputting an individual audio signal from the composite audio signal corresponding to each respective speaker of the multiple speakers.

9. A system (102) for supervised training of a causal neural network (106) for a streaming audio processing application, the system comprising:
a memory (104) configured to store a set of computer-readable instructions; and
a processor (108) operably coupled to the memory (104); wherein the processor (108) configured to execute the set of computer-readable instructions to:
acquire an input mixture signal (100c) corresponding to two or more speakers; and
train the causal neural network (106), to transform the input mixture signal (100c) into an output signal (110a, 110b) matching a ground truth signal (s), by processing the input mixture signal (100c) conditioned on a causal input including a delayed version of the input mixture signal (100c) transformed by the causal neural network (106) without the causal input.

10. The system of claim 9,
wherein the causal neural network (106) includes a first input channel for acquiring the input mixture signal and a second input channel for acquiring a conditioning input, and
wherein, to the train the causal neural network (106), the processor (108) is further configured to:
execute the causal neural network (106) with the input mixture signal (100c) acquired on the first input channel and with predetermined values agnostic to the input mixture signal (100c) acquired on the second input channel as the conditioning input to generate a non-autoregressive version of the output signal generated by the causal neural network (106) without the causal input;
execute the causal neural network (106) with the input mixture signal (100c) acquired on the first input channel and with a delayed version of the non-autoregressive output signal acquired on the second input channel as the conditioning input to generate the output signal (110a, 110b); and
update weights of the causal neural network (106) to reduce an error between the output signal (110a, 110b) and the ground truth signal (s).

11. The system of claim 10, wherein the weights of the causal neural network (106) are updated with back-propagation to reduce a compound loss function including a first loss term of an error between the non-autoregressive output signal and the ground truth signal and a second loss term of an error between the output signal (110a, 110b) and the ground truth signal (s).

12. The system of claim 10, wherein the predetermined values are equal to zero, and wherein the delayed version of the non-autoregressive output signal is padded with zeros defining an extent of the delay.

13. The system of claim 12, wherein the training uses a pseudo-autoregressive Siamese training of multiple copies of the causal neural network (106) with shared weights, wherein a first copy of the causal neural network (106) is used to produce the non-autoregressive output signal and a second copy of the causal neural network (106) is used to generate the output signal (110a, 110b), wherein the execution of the second copy is delayed from the execution of the first copy with the extent of the delay.

14. The system of claim 10, wherein the audio processing application includes a speech separation, wherein the input mixture signal (100c) includes a mixture of speech, wherein the second input channel includes two sub-channels, wherein the non-autoregressive output signal includes two sub-channels, wherein the first sub-channel includes a non-autoregressive first speech utterance and the second sub-channel includes a non-autoregressive second speech utterance separated from the mixture, wherein the acquiring of the delayed version of the non-autoregressive output signal on the second input channel as the conditioning input is such that a delayed version of the non-autoregressive first speech utterance is acquired on the first sub-channel of the second input channel, and a delayed version the non-autoregressive second speech utterance is acquired on the second sub-channel of the second input channel, wherein the output signal (110a, 110b) includes two sub-channels, wherein the first sub-channel includes a first speech utterance and the second sub-channel includes a second speech utterance separated from the mixture.

15. The system of claim 9, wherein the input mixture signal (100c) includes a plurality of chunks of audio frames or
wherein the output signal (110a, 110b) includes a separated speech signal corresponding to each speaker of the two or more speakers.

## Patentansprüche

1. Verfahren zum überwachten Training eines kausalen neuronalen Netzes (106) für eine Audio-Streaming-Verarbeitungsanwendung, wobei das Verfahren umfasst:
Erwerben eines Eingangs-Mischsignals (100c), das Sprache von zwei oder mehr Sprechern enthält; und
Trainieren des kausalen neuronalen Netzes (106), um das Eingangs-Mischsignal (100c) in ein Ausgangssignal (110a, 110b), das mit einem Ground-Truth-Signal (s) übereinstimmt, durch Verarbeitung des Eingangs-Mischsignals (100c) unter der Bedingung eines kausalen Eingangs, der eine verzögerte Version des Eingangs-Mischsignals (100c) enthält, die durch das kausale neuronale Netz (106) ohne den kausalen Eingang transformiert wurde, zu transformieren.

2. Verfahren nach Anspruch 1, wobei das kausale neuronale Netz (106) einen ersten Eingangskanal zum Erwerben des Eingangs-Mischsignals (100c) und einen zweiten Eingangskanal zum Erwerben eines Konditionierungseingangs umfasst, wobei das Training umfasst:
Ausführen des kausalen neuronalen Netzes (106) mit dem auf dem ersten Eingangskanal erworbenen Eingangs-Mischsignal (100c) und mit vorbestimmten Werten, die unabhängig von dem auf dem zweiten Eingangskanal erworbenen Eingangs-Mischsignal (100c) sind, als den Konditionierungseingang, um eine nicht-autoregressive Version des von dem kausalen neuronalen Netz generierten Ausgangssignals (106) ohne den kausalen Eingang zu generieren;
Ausführen des kausalen neuronalen Netzes (106) mit dem auf dem ersten Eingangskanal erworbenen Eingangs-Mischsignal (100c) und mit einer verzögerten Version des auf dem zweiten Eingangskanal erworbenen nicht-autoregressiven Ausgangssignals als den Konditionierungseingang, um das Ausgangssignal (110a, 110b) zu generieren; und
Aktualisieren von Gewichtungen des kausalen neuronalen Netzes (106), um einen Fehler zwischen dem Ausgangssignal (110a, 110b) und dem Ground-Truth-Signal (s) zu minimieren.

3. Verfahren nach Anspruch 2, wobei die Gewichtungen des kausalen neuronalen Netzes (106) mittels Rückpropagation aktualisiert werden, um eine zusammengesetzte Verlustfunktion, die einen ersten Verlustterm eines Fehlers zwischen dem nicht-autoregressiven Ausgangssignal und dem Ground-Truth-Signal und einen zweiten Verlustterm eines Fehlers zwischen dem Ausgangssignal (110a, 110b) und dem Ground-Truth-Signal (s) enthält, zu minimieren.

4. Verfahren nach Anspruch 2, wobei die vorgegebenen Werte gleich Null sind, und wobei die verzögerte Version des nicht-autoregressiven Ausgangssignals mit Nullen aufgefüllt wird, die das Ausmaß der Verzögerung definieren.

5. Verfahren nach Anspruch 4, wobei das Training ein pseudoautoregressives Siam-Training mehrerer Kopien des kausalen neuronalen Netzes (106) mit geteilten Gewichtungen nutzt, wobei eine erste Kopie des kausalen neuronalen Netzes (106) zur Erzeugung des nicht-autoregressiven Ausgangssignals genutzt wird, und eine zweite Kopie des kausalen neuronalen Netzes (106) zur Erzeugung des Ausgangssignals (110a, 110b) genutzt wird, wobei die Ausführung der zweiten Kopie gegenüber der Ausführung der ersten Kopie um das Ausmaß der Verzögerung verzögert wird.

6. Verfahren nach Anspruch 2, wobei die Audio-Streaming-Verarbeitungsanwendung eine Sprachseparation umfasst, wobei das Eingangs-Mischsignal (100c) ein Gemisch aus Sprache enthält, wobei der zweite Eingangskanal zwei Unterkanäle umfasst, wobei das nicht-autoregressive Ausgangssignal zwei Unterkanäle umfasst, wobei der erste Unterkanal eine nicht-autoregressive erste Sprachäußerung enthält und der zweite Unterkanal eine nicht-autoregressive zweite Sprachäußerung enthält, die aus dem Gemisch separiert wurde, wobei der Erwerb der verzögerten Version des nicht-autoregressiven Ausgangssignals auf dem zweiten Eingangskanal als der Konditionierungseingang derart erfolgt, dass eine verzögerte Version der nicht-autoregressiven ersten Sprachäußerung auf dem ersten Unterkanal des zweiten Eingangskanals erworben wird, und eine verzögerte Version der nicht-autoregressiven zweiten Sprachäußerung auf dem zweiten Unterkanal des zweiten Eingangskanals erworben wird, wobei das Ausgangssignal zwei Unterkanäle umfasst, wobei der erste Unterkanal eine erste Sprachäußerung enthält und der zweite Unterkanal eine zweite Sprachäußerung enthält, die aus dem Gemisch separiert wurde.

7. Verfahren nach Anspruch 1, wobei das Eingangs-Mischsignal (100c) eine Vielzahl von Blöcken aus Audio-Frames enthält, oder
wobei das Ausgangssignal ein separiertes Sprachsignal enthält, das jedem Sprecher der zwei oder mehr Sprecher entspricht.

8. Audioverarbeitungsverfahren umfassend:
Erfassen eines zusammengesetzten Audiosignals (600), das ein Gemisch aus Äußerungen mehrerer Sprecher umfasst;
Verarbeiten des zusammengesetzten Audiosignals (600) unter Verwendung des kausalen neuronalen Netzes (106, 604A), das gemäß dem Verfahren nach Anspruch 1 trainiert wurde; und
Ausgeben eines einzelnen Audiosignals aus dem zusammengesetzten Audiosignal, das dem jeweiligen Sprecher der mehreren Sprecher entspricht.

9. System (102) zum überwachten Training eines kausalen neuronalen Netzes (106) für eine Audio-Streaming-Verarbeitungsanwendung, wobei das System umfasst:
einen Arbeitsspeicher (104), der eingerichtet ist, eine Menge an computerlesbaren Anweisungen zu speichern; und
einen Prozessor (108), der mit dem Arbeitsspeicher (104) operativ gekoppelt ist; wobei der Prozessor (108) eingerichtet ist, die Menge an computerlesbaren Anweisungen auszuführen, um:
ein Eingangs-Mischsignal (100c), das zwei oder mehr Sprechern entspricht, zu erwerben; und
das kausale neuronale Netze (106) zu trainieren, um das Eingangs-Mischsignal (100c) in ein Ausgangssignal (110a, 110b), das mit einem Ground-Truth-Signal (s) übereinstimmt, durch Verarbeitung des Eingangs-Mischsignals (100c) unter der Bedingung eines kausalen Eingangs, der eine verzögerte Version des Eingangs-Mischsignals (100c) enthält, die durch das kausale neuronale Netz (106) ohne den kausalen Eingang transformiert wurde, zu transformieren.

10. System nach Anspruch 9,
wobei das kausale neuronale Netz (106) einen ersten Eingangskanal zum Erwerben des Eingangs-Mischsignals und einen zweiten Eingangskanal zum Erwerben eines Konditionierungseingangs umfasst, und
wobei der Prozessor (108) zum Trainieren des kausalen neuronalen Netzes (106) ferner eingerichtet ist, um:
das kausale neuronale Netz (106) mit dem auf dem ersten Eingangskanal erworbenen Eingangs-Mischsignal (100c) und mit vorbestimmten Werten, die unabhängig von dem auf dem zweiten Eingangskanal erworbenen Eingangs-Mischsignal (100c) sind, als den Konditionierungseingang auszuführen, um eine nicht-autoregressive Version des von dem kausalen neuronalen Netz generierten Ausgangssignals (106) ohne den kausalen Eingang zu generieren;
das kausale neuronale Netz (106) mit dem auf dem ersten Eingangskanal erworbenen Eingangs-Mischsignal (100c) und mit einer verzögerten Version des auf dem zweiten Eingangskanal erworbenen nicht-autoregressiven Ausgangssignals als den Konditionierungseingang auszuführen, um das Ausgangssignal (110a, 110b) zu generieren; und
Gewichtungen des kausalen neuronalen Netzes (106) zu aktualisieren, um einen Fehler zwischen dem Ausgangssignal (110a, 110b) und dem Ground-Truth-Signal (s) zu minimieren.

11. System nach Anspruch 10, wobei die Gewichtungen des kausalen neuronalen Netzes (106) mittels Rückpropagation aktualisiert werden, um eine zusammengesetzte Verlustfunktion, die einen ersten Verlustterm eines Fehlers zwischen dem nicht-autoregressiven Ausgangssignal und dem Ground-Truth-Signal und einen zweiten Verlustterm eines Fehlers zwischen dem Ausgangssignal (110a, 110b) und dem Ground-Truth-Signal (s) enthält, zu minimieren.

12. System nach Anspruch 10, wobei die vorgegebenen Werte gleich Null sind, und wobei die verzögerte Version des nicht-autoregressiven Ausgangssignals mit Nullen aufgefüllt wird, die das Ausmaß der Verzögerung definieren.

13. System nach Anspruch 12, wobei das Training ein pseudoautoregressives Siam-Training mehrerer Kopien des kausalen neuronalen Netzes (106) mit geteilten Gewichtungen nutzt, wobei eine erste Kopie des kausalen neuronalen Netzes (106) zur Erzeugung des nicht-autoregressiven Ausgangssignals genutzt wird, und eine zweite Kopie des kausalen neuronalen Netzes (106) zur Erzeugung des Ausgangssignals (110a, 110b) genutzt wird, wobei die Ausführung der zweiten Kopie gegenüber der Ausführung der ersten Kopie um das Ausmaß der Verzögerung verzögert wird.

14. System nach Anspruch 10, wobei die Audio-Verarbeitungsanwendung eine Sprachseparation umfasst, wobei das Eingangs-Mischsignal (100c) ein Gemisch aus Sprache enthält, wobei der zweite Eingangskanal zwei Unterkanäle umfasst, wobei das nicht-autoregressive Ausgangssignal zwei Unterkanäle umfasst, wobei der erste Unterkanal eine nicht-autoregressive erste Sprachäußerung enthält und der zweite Unterkanal eine nicht-autoregressive zweite Sprachäußerung enthält, die aus dem Gemisch separiert wurde, wobei der Erwerb der verzögerten Version des nicht-autoregressiven Ausgangssignals auf dem zweiten Eingangskanal als der Konditionierungseingang derart erfolgt, dass eine verzögerte Version der nicht-autoregressiven ersten Sprachäußerung auf dem ersten Unterkanal des zweiten Eingangskanals erworben wird, und eine verzögerte Version der nicht-autoregressiven zweiten Sprachäußerung auf dem zweiten Unterkanal des zweiten Eingangskanals erworben wird, wobei das Ausgangssignal (110a, 110b) zwei Unterkanäle umfasst, wobei der erste Unterkanal eine erste Sprachäußerung enthält und der zweite Unterkanal eine zweite Sprachäußerung enthält, die aus dem Gemisch separiert wurde.

15. System nach Anspruch 9, wobei das Eingangs-Mischsignal (100c) eine Vielzahl von Blöcken aus Audio-Frames enthält, oder
wobei das Ausgangssignal (110a, 110b) ein separiertes Sprachsignal enthält, das jedem Sprecher der zwei oder mehr Sprecher entspricht.

## Revendications

1. Un procédé d'entraînement supervisé d'un réseau neuronal causal (106) pour une application de traitement audio en flux continu, le procédé comprenant:
acquérir un signal de mélange d'entrée (100c) incluant de la parole de deux ou plusieurs locuteurs; et
entraîner le réseau neuronal causal (106), pour transformer le signal de mélange d'entrée (100c) en un signal de sortie (110a, 110b) correspondant à un signal de vérité terrain (s), en traitant le signal de mélange d'entrée (100c) conditionné par une entrée causale comprenant une version retardée du signal de mélange d'entrée (100c) transformé par le réseau neuronal causal (106) sans l'entrée causale.

2. Le procédé selon la revendication 1, dans lequel le réseau neuronal causal (106) inclut un premier canal d'entrée pour acquérir le signal de mélange d'entrée (100c) et un deuxième canal d'entrée pour acquérir une entrée de conditionnement, dans lequel l'entraînement comprend:
exécuter le réseau neuronal causal (106) avec le signal de mélange d'entrée (100c) acquis sur le premier canal d'entrée et avec des valeurs prédéterminées indépendantes vis-à-vis du signal de mélange d'entrée (100c) acquises sur le deuxième canal d'entrée en tant qu'entrée de conditionnement pour générer une version non autorégressive du signal de sortie généré par le réseau neuronal causal (106) sans l'entrée causale;
exécuter le réseau neuronal causal (106) avec le signal de mélange d'entrée (100c) acquis sur le premier canal d'entrée et avec une version retardée du signal de sortie non autorégressive acquis sur le deuxième canal d'entrée en tant que entrée de conditionnement pour générer le signal de sortie (110a, 110b); et
mettre à jour des poids du réseau neuronal causal (106) pour réduire une erreur entre le signal de sortie (110a, 110b) et le signal de vérité terrain (s).

3. Le procédé selon la revendication 2, dans lequel les poids du réseau neuronal causal (106) sont mis à jour avec une rétropropagation pour réduire une fonction de perte composée incluant un premier terme de perte d'une erreur entre le signal de sortie non autorégressive et le signal de vérité terrain et un deuxième terme de perte d'une erreur entre le signal de sortie (110a, 110b) et le signal de vérité terrain (s).

4. Le procédé selon la revendication 2, dans lequel les valeurs prédéterminées sont égales à zéro, et dans lequel la version retardée du signal de sortie non autorégressive est complétée par des zéros définissant une étendue du retard.

5. Le procédé selon la revendication 4, dans lequel l'entraînement utilise un entraînement siamois pseudo-autorégressif de multiples copies du réseau neuronal causal (106) avec des poids partagés, dans lequel une première copie du réseau neuronal causal (106) est utilisée pour produire le signal de sortie non autorégressive et une deuxième copie du réseau neuronal causal (106) est utilisée pour générer le signal de sortie (110a, 110b), dans lequel l'exécution de la deuxième copie est retardée par rapport à l'exécution de la première copie avec l'étendue du retard.

6. Le procédé selon la revendication 2, dans lequel l'application de traitement audio en continu inclut une séparation de parole, dans lequel le signal de mélange d'entrée (100c) inclut un mélange de parole, dans lequel le deuxième canal d'entrée inclut deux sous-canaux, dans lequel le signal de sortie non autorégressive inclut deux sous-canaux, dans lequel le premier sous-canal inclut un premier énoncé vocal non autorégressif et le deuxième sous-canal inclut un deuxième énoncé vocal non autorégressif séparé du mélange, dans lequel l'acquisition de la version retardée du signal de sortie non autorégressive sur le deuxième canal d'entrée comme entrée de conditionnement est telle qu'une version retardée du signal de sortie non-premier énoncé vocal autorégressif est acquis sur le premier sous-canal du deuxième canal d'entrée, et une version retardée le deuxième non autorégressif énoncé vocal est acquis sur le deuxième sous-canal de la deuxième entrée canal, dans lequel le signal de sortie inclut deux sous-canaux, dans lequel le premier sous-canal inclut un premier énoncé vocal et le deuxième sous-canal inclut un deuxième énoncé vocal séparé du mélange.

7. Le procédé selon la revendication 1, dans lequel le signal de mélange d'entrée (100c) inclut une pluralité de blocs de trames audio ou
dans lequel le signal de sortie inclut un signal vocal séparé correspondant à chaque locuteur des deux locuteurs ou plus.

8. Un procédé de traitement audio, comprenant:
collecter un signal audio composite (600) comprenant un mélange de énoncés provenant de multiples locuteurs;
traiter le signal audio composite (600) à l'aide du réseau neuronal causal (106, 604A) entraîné selon le procédé selon la revendication 1; et
délivrer en sortie un signal audio individuel à partir du signal audio composite correspondant à chaque locuteur respectif des multiples locuteurs.

9. Un système (102) pour l'entraînement supervisé d'un réseau neuronal causal (106) pour une application de traitement audio en continu, le système comprenant:
une mémoire (104) configurée pour stocker un ensemble d'instructions lisibles par ordinateur; et
un processeur (108) couplé de manière opérationnelle à la mémoire (104); dans lequel le processeur (108) configuré pour exécuter l'ensemble d'instructions lisibles par ordinateur pour:
acquérir un signal de mélange d'entrée (100c) correspondant à deux locuteurs ou plus; et
entraîner le réseau neuronal causal (106), pour transformer le signal de mélange d'entrée (100c) en un signal de sortie (110a, 110b) correspondant à un signal de vérité terrain (s), en traitant le signal de mélange d'entrée (100c) conditionné par une entrée causale comprenant une version retardée du signal de mélange d'entrée (100c) transformé par le réseau neuronal causal (106) sans l'entrée causale.

10. Le système selon la revendication 9,
dans lequel le réseau neuronal causal (106) comprend un premier canal d'entrée pour acquérir le signal de mélange d'entrée et un deuxième canal d'entrée pour acquérir une entrée de conditionnement, et
dans lequel, pour le entraîner le réseau neuronal causal (106), le processeur (108) est en outre configuré pour:
exécuter le réseau neuronal causal (106) avec le mélange d'entrée signal (100c) acquis sur le premier canal d'entrée et avec des valeurs prédéterminées indépendantes du signal de mélange d'entrée (100c) acquises sur le deuxième canal d'entrée en tant qu'entrée de conditionnement pour générer une version non autorégressive du signal de sortie généré par le réseau neuronal causal (106) sans l'entrée causale;
exécuter le réseau neuronal causal (106) avec le mélange d'entrée signal (100c) acquis sur le premier canal d'entrée et avec une version retardée du signal de sortie non autorégressive acquise sur le deuxième canal d'entrée en tant qu'entrée de conditionnement pour générer le signal de sortie (110a, 110b); et
mettre à jour les poids du réseau neuronal causal (106) afin de réduire une erreur entre le signal de sortie (110a, 110b) et le signal de vérité terrain (s).

11. Le système selon la revendication 10, dans lequel les poids du réseau neuronal causal (106) sont mis à jour avec une rétropropagation pour réduire une fonction de perte composée incluant un premier terme de perte d'une erreur entre le signal de sortie non autorégressive et le signal de vérité terrain et un deuxième terme de perte d'une erreur entre le signal de sortie (110a, 110b) et le signal de vérité terrain (s).

12. Le système selon la revendication 10, dans lequel les valeurs prédéterminées sont égales à zéro, et dans lequel la version retardée du signal de sortie non autorégressive est complétée avec des zéros définissant une étendue du retard.

13. Le système selon la revendication 12, dans lequel l'entraînement utilise un entraînement siamois pseudo-autorégressif de multiples copies du réseau neuronal causal (106) avec des poids partagés, dans lequel une première copie du réseau neuronal causal (106) est utilisée pour produire le signal de sortie non autorégressive et une deuxième copie du réseau neuronal causal (106) est utilisée pour générer le signal de sortie (110a, 110b), dans lequel l'exécution de la deuxième copie est retardée par rapport à l'exécution de la première copie de l'étendue du retard.

14. Le système selon la revendication 10, dans lequel l'application de traitement audio inclut une séparation de parole, dans lequel le signal de mélange d'entrée (100c) inclut un mélange de parole, dans lequel le deuxième canal d'entrée inclut deux sous-canaux, dans lequel le signal de sortie non autorégressive inclut deux sous-canaux, dans lequel le premier sous-canal inclut un premier énoncé vocal non autorégressif et le deuxième sous-canal inclut un deuxième énoncé vocal non autorégressif séparé du mélange, dans lequel l'acquisition de la version retardée du signal de sortie non autorégressive sur le deuxième canal d'entrée en tant qu'entrée de conditionnement est telle qu'une version retardée du premier énoncé vocal non autorégressif est acquise sur le premier sous-canal du deuxième canal d'entrée, et une version retardée le deuxième énoncé vocal non autorégressif est acquise sur le deuxième sous-canal de la deuxième entrée canal, dans lequel le signal de sortie (110a, 110b) comprend deux sous-canaux, dans lequel le premier sous-canal comprend un premier énoncé vocal et le deuxième sous-canal comprend un deuxième énoncé vocal séparé du mélange.

15. Le système selon la revendication 9, dans lequel le signal de mélange d'entrée (100c) comprend une pluralité de blocs de trames audio ou
dans lequel le signal de sortie (110a, 110b) comprend un signal vocal séparé correspondant à chaque locuteur des deux locuteurs ou plus.
